(19) Europäisches Patentamt
European Patent Office
Office européen des brevets

(11) Veröffentlichungsnummer: **0 035 072 B1**

(12) # EUROPÄISCHE PATENTSCHRIFT

(45) Veröffentlichungstag der Patentschrift: **13.06.84**

(51) Int. Cl.$^{3}$: **H 01 B 3/40**, C 08 G 59/40

(21) Anmeldenummer: **80200188.3**

(22) Anmeldetag: **03.03.80**

(54) **Duroplastisch härtbare lösungsmittelfreie Harzmischung und ihre Verwendung.**

(43) Veröffentlichungstag der Anmeldung: **09.09.81 Patentblatt 81/36**

(45) Bekanntmachung des Hinweises auf die Patenterteilung: **13.06.84 Patentblatt 84/24**

(84) Benannte Vertragsstaaten: **CH DE FR GB IT SE**

(56) Entgegenhaltungen:
**DE-A- 2 359 386**
**DE-A- 2 444 458**
**DE-A- 2 446 310**
**DE-A- 2 655 367**
**DE-B- 1 032 351**
**CHEMICAL ABSTRACTS, Band 83, Nr. 16, Seite 60, Zusammenfassung Nr. 132745v, 1975, Columbus, Ohio, US**
**CHEMICAL ABSTRACT, Band 82, Nr. 22, 1975, Seite 93, Zusammenfassung Nr. 141711n, Columbus, Ohio, US**

(73) Patentinhaber: **BBC Aktiengesellschaft Brown, Boveri & Cie.**
**Haselstrasse**
**CH-5401 Baden (CH)**

(72) Erfinder: **Kovacs, Zoltan, Dr. Dipl.-Chem.**
**Oerlikonerstrasse 32**
**CH-8057 Zürich (CH)**
Erfinder: **Schuler, Roland**
**Aehrenweg 7**
**CH-5430 Wettingen AG (CH)**

**EP 0 035 072 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine duroplastisch härtbare, von flüchtigen Lösungsmitteln praktisch freie Harzmischung, die sich insbesondere als hoch wärmebeständiges Imprägnier-, Tränk- und Giessharz für die Isolation von elektrischen Leitern und Wicklungen in elektrischen Maschinen und Apparaten eignet, z. B. als Imprägnierharz für elektrische Maschinen der Temperaturklasse H-C.

Die hierfür z. B. aus der DE-B-2 444 458 bekannten Mischungen aus Epoxidverbindung, Polyisocyanaten und einem Härter auf der Basis vón Morpholin- oder Imidazolverbindungen haben eine für die wirtschaftliche Fertigung allgemein viel zu kurze Topfzeit (gemessene Zeit bis zur Viskositätsverdoppelung bei 23 °C) von nur einigen Stunden. Zur Behebung des Nachteils der zu kurzen Topfzeit solcher Mischungen ist es z. B. aus der DE-C-2 655 367 bekannt, als latente Härter statt der Morpholin- bzw. Imidazolverbindungen bestimmte Additionskomplexverbindungen von tertiären Aminen und Bortrichlorid zu verwenden. Dies führt zu einer beachtlichen Verlängerung der Topfzeit der Mischung, z. B. auf mehr als 100 Tage, aber gleichzeitig zu einer solchen Verschlechterung der mechanischen Eigenschaften der duroplastisch ausgehärteten Mischung, dass sich solche Mischungen nicht mehr ohne weiteres als Isolationsharze für hochausgenützte, d. h. im Betrieb thermisch stark belastbare Maschinen eignen.

Aufgabe der Erfindung ist es, eine duroplastisch härtbare Lösungsmittelfreie (d. h. praktisch frei von flüchtigen Lösungsmitteln) Harzmischung anzugeben, die als Komponenten reaktionsfähige flüssige Epoxidverbindung und Polyisocyanate sowie einen latenten Härter für diese Komponenten enthält und dabei eine Topfzeit in der Grössenordnung von einigen Wochen ohne Beeinträchtigung der mechanischen Eigenschaften bietet.

Erfindungsgemäss wird diese Aufgabe durch Verwendung von mindestens 0,1 Gew.% und höchstens 30 Gew.% Triallylcyanurat als Vernetzungsmittel in solchen Mischungen gelöst.

Triallylcyanurat (im folgenden auch kurz TAC genannt) ist eine bekannte und technisch erhältliche Verbindung der Formel

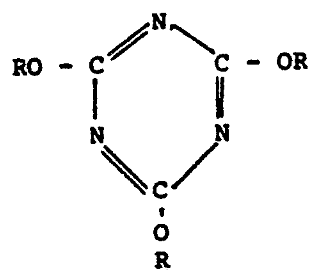

in der R den Allylrest $—CH_2CH = CH_2$ bedeutet. TAC ist oberhalb von 28 °C flüssig (F = 27,3 °C) und siedet bei 120 °C ; die Fähigkeit von TAC zur Additions- bzw. Copolymerisation sowie seine tendenz zu starker Vernetzung ist an sich aus seiner Struktur mit drei endständigen Olefingruppen zu erwarten und seine Verwendung zur Verbesserung der Hitzebeständigkeit von Polyesterharzen ist bekannt. Bekannt ist ferner seit längerem die Verwendung von TAC in Epoxid/Polyester-Systemen gemäss DE-B-1 032 351 sowie seit neuerem die Verwendung von TAC in Form eines Vorpolymers in Epoxidharzsystemen, die Maleinimide enthalten (C. A. 83/1975/, Seite 60, Nr. 132745v) bzw. die Verwendung von TAC in photohärtbaren Harzmischungen auf Basis von Epoxidharzen und α, β-ungesättigten Carbonsäuren.

Es ist überraschend, dass die Verwendung von TAC als Vernetzungskomponente in den eingangs erwähnten Mischungen aus Epoxidverbindung, Polyisocyanat und latentem Härter die Topfzeit der Mischung nicht kritisch vermindert und somit die Ausschaltung der Nachteile der Harzmischungen der DE-B-2 444 458 gestattet, ohne dass die bisher mit einer verlängerten Topfzeit verbundenen Nachteile der Harzmischungen gemäss DE-B-2 655 367 (erheblich verschlechterte mechanische Eigenschaften der gehärteten Mischung, d. h. des entstehenden Duroplastes) in Kauf genommen werden müssen.

Im folgenden werden die Komponenten erfindungsgemässer Harzmischungen erläutert. Hinweise auf den Duroplast beziehen sich dabei auf die ausgehörtete Mischung.

Als Polyisocyanate, insbesondere Di- oder Triisocyanate, sind hier allgemein meist relativ niedrigviskose aliphatische, cycloaliphatische und aromatische monomere oder oligomere Verbindungen, aus den Monomeren gebildete Carbodiimide bzw. Mischungen hiervon geeignet. Aromatische Polyisocyanate verleihen dem Duroplast eine relativ hohe Temperaturbeständigkeit und gute elektrische Eigenschaften (z. B. hohe Spannungsfestigkeit). Aliphatische Polyisocyanate werden vorzugsweise meist nur in vergleichsweise geringeren Anteilen verwendet um den Duroplast zu flexibilisieren. Für viele Anwendungen bevorzugt wird ein Isomerengemisch aus 4,4'- und 2,4'-Diphenylmethandiisocyanat mit sehr geringem Chlorgehalt und/oder Isophorondiisocyanat. Das Isomerengemisch aus 4,4'- und 2,4'-Diphenylmethandiisocyanat kann teilweise auch mit aus diesen Monomeren gebildeten Carbodiimide ersetzt werden.

Weitere spezielle Beispiele für Polyisocyanatharze sind in den oben erwähnten Publikationen genannt und umfassen insbesondere die folgenden Stoffe : Alkandiisocyanate, wie Butan-1,1- oder 1,2-oder 1,4-diisocyanat, Propan-1,3-diisocyanat, 2-Methylbutan-1,4-diisocyanat, Pentan-1,5-diisocyanat, 2,2-Dimethylpentan-1,5-diisocyanat, Hexan-1,6-diisocyanat, Heptan-1,7-diisocyanat, Octan-1,8-diisocyanat, Nonan-1,9-diisocyanat und Decan-1,10-diisocyanat; Aryl- bzw. Alkaryl-, Aralkyl- oder Cycloalkyldiisocyanate, wie Dimethylbenzoldiisocyanate, Dimethylcyclohexandiisocyanate, Dimethylnaphthalindiisocyanate, Cyclohexan-1,3- oder 1,4-diisocyanat, Dicyclohexylmethan-4,4'-diisocyanat, Phenylendiisocyanate, Methylbenzol-diisocyanate, Diphenyläther-diisocyanate, Biphenyl-diisocyanate, Dimethylbiphenylisocyanate, Dimethoxybiphenyl-diisocyanate, Diphenylmethan-diisocyanate, und aus diesen gebildete Carbodiimide, Dimethoxydiphenylmethan-diisocyanate sowie trifunktionelle oder mehrfunktionelle Isocyanate, wie Polymethylenpolyphenylisocyanat, Triphenylmethantriisocyanat und 3,3',4,4'-Diphenylmethantetraisocyanat.

Mischungen von zwei oder mehr der genannten Polyisocyanate sind ebenfalls geeignet.

Als Polyepoxidverbindungen sind relativ niedrigviskose aliphatische, cycloaliphatische oder aromatische Epoxidverbindungen sowie deren Mischungen verwendbar. Für viele Anwendungen bevorzugt wird Bisphenol-A-diglycidyläther und/oder Bisphenol-F-diglycidyläther.

Weitere spezielle Beispiele von Epoxidverbindungen sind im « Handbook of Epoxy Resin » von H. Lee et al, 1967, in « Epoxy Resins » (Am. Chem. Soc. 1970) sowie den oben genannten Patentschriften zu finden. Hierzu gehören z. B. Butadiendiepoxid, 3,4-Epoxycyclohexylmethyl-(3,4-epoxy)-cyclohexancarboxylat, Vinylcyclohexendioxid, 4,4'-Di-(1,2-epoxyäthyl)-diphenyläther, 4,4'-Di-(1,2-epoxyäthyl)-biphenyl, 2,2-Bis-(3,4-epoxycyclohexyl)-propan, Diglycidyläther des Resorcins, des Phloroglucins und des Methylphloroglucins, Bis-(2,3-epoxycyclopentyl)-äther, 2-(3,4-Epoxy)-cyclohexan-5,5-spiro-(3,4-epoxy)-cyclohexan-m-dioxan, Bis-(3,4-epoxy-6-methylcyclohexyl)-adipat und N,N'-m-Phenylen-bis-(4,5-epoxy-1,2-cyclohexandicarboxyimid) sowie tri- oder mehrfunktionelle Epoxyverbindungen, wie Triglycidyläther von Paraminophenol, Polyallylglycidyläther, 1,3,5-Tri-(1,2-epoxyäthyl)-benzol, 2,2',4,4'-Tetraglycidoxybenzophenon, Tetraglycidoxytetraphenyläthan, Polyglycidyläther von Phenol/Formaldehyd-Novolak, Triglycidyläther von Glycerin und Triglycidyläther von Trimethylolpropan.

Als latente Härter (Katalysatoren) geeignet sind z. B. die in der DE-PS 2 655 367 beschriebenen Additionskomplexe von Bortrichlorid und tertiärem Amin der Formel $BCl_3 \cdot NR^1R^2R^3$, in der $R^1$, $R^2$ und $R^3$ gleiche oder verschiedene organische Reste sind, die paarweise auch Teile von heterocyclischen Ringen darstellen können. Ebenfalls geeignet sind die analogen Komplexe des Bortrifluorids der Formel $BF_3 \cdot NR^1R^2R^3$, in der $R^1$, $R^2$ und $R^3$ wie oben definiert sind. Spezielle Beispiele für geeignete tertiäre Amine der $BF_3$- bzw. $BCl_3$-Komplexe sind Octyldimethylamin, Benzyldimethylamin. Als Gruppe tertiärer Amine sind die Di-nieder-acyl-, Di-nieder-alkyl-aryl-, Di-niederalkyl-aracyl- und die Di-niederalkyl-heterocycloamine zu nennen.

Auch andere Härter, wie die in der DE-AS 2 444 458 genannten Mono- oder Dimorpholinverbindungen und Imidazole sind geeignet. Auch andere latente Härter, wie z. B. ein Gemisch von Triäthanolamin-Titansäureester-Chelaten mit Borsäure-ester, wie von D. E. Kline in J. Polymer Sci. 47, 237 (1960) und von H. Zumstein in Plastics Technology 9/1, 11 (1963) beschrieben, sind geeignet. Zusätze von Kaliumacetat können wenn erwünscht die Isocyanat-Ringbildung bei der Aushärtung des Gemisches beschleunigen.

Die erfindungsgemäss als zusätzliche vierte Komponente der neuen duroplastisch härtbaren Mischungen zur Vernetzung verwendete Verbindung ist, wie erwähnt, das Triallylcyanurat.

Die Mischung kann weitere Komponenten enthalten, die sich jedoch vorzugsweise nicht an der zum Duroplast führenden Polyreaktion beteiligen. Füll- oder Farbstoffe sowie Stabilisatoren üblicher Art kommen ebenfalls als fakultative Zusätze in Frage. Füllstoffe können verwendet werden. Für die bevorzugte Anwendungsform, d. h. als Imprägnierharz, werden normalerweise keine Füllstoffzusätze verwendet, da die Mischung keine die Viskosität unnötig erhöhenden Komponenten enthalten soll und die meist gewünschte mechanische Gerüstbildung von dem imprägnierten Material einschliesslich porösem Zwischenlagenmaterial nach dem Aushärten der Mischung übernommen wird.

Vorzugsweise werden die Anteile der erfindungsgemässen Mischung so gewählt, dass diese pro Aequivalent Polyepoxidverbindung 2 bis 5,5 Aequivalent und vorzugsweise 2 bis 3,5 Polyisocyanat enthält.

Der latente Härter kann in üblichen Anteilen von beispielsweise 0,01 bis 5 Gew.%, vorzugsweise 0,05 bis 2,5 Gew.%, jeweils auf das Gewicht der Gesamtmischung bezogen, verwendet werden. Durch die Art und Konzentration des latenten Härters kann in an sich bekannter Weise die Härtungstemperatur und -dauer beeinflusst werden.

Das Triallylcyanurat wird meist in Anteilen von über 0,1 Gew.% und unter 30 Gew.%, bezogen auf das Gewicht der Gesamtmischung, verwendet. TAC-Anteile unter 0,1 Gew.% bringen keine signifikanten Eigenschaftsverbesserungen, während Anteile über 30 Gew.% häufig zu einer unerwünschten Versprödung führen können. TAC-Anteile im Bereich von 0,5 bis 10 Gew.%, insbesondere 0,5 bis 3 Gew.%, sind für viele Zwecke geeignet.

In den folgenden Beispielen, in denen Prozentangaben auf das Gewicht bezogen sind, werden folgende Komponenten verwendet:

(A-1) Polyisocyanat: Mischung (ca 1 : 1) von 4,4'- und 2,4'- Diphenylmethandiisocyanat,

| | |
|---|---|
| dyn. Viskosität bei 25 °C | 15 mPas |
| NCO-Gehalt | 33 % |
| NCO-Aequiv. Gewicht | 130 g/Mol |
| Molgewicht | 250 |
| Gesamtchlor | < 100 ppm |

(A-2) Polyisocyanat : Mischung (ca. 1 : 10) 4,4'- und 2,4'-Diphenylmethandiisocyanat, wobei 20 % dieser Mischung in Form von Carbodiimid vorliegt.

| | |
|---|---|
| dyn. Viskosität bei 25 °C | 15 mPas |
| NCO-Gehalt | 29 % |
| NCO-Aequiv. Gewicht | 143 g/Mol |

(A-3) Polyisocyanat : Isophorondiisocyanat,

| | |
|---|---|
| dyn. Viskosität bei 23 °C | 15 mPas |
| NCO-Gehalt | 37,5 % |
| NCO-Aequiv. Gewicht | 111,1 |
| Molgewicht | 222,3 |
| Gesamtchlor | < 150 ppm |

(B-1) Epoxidverbindung : Bisphenol-A-diglycidyläther, (molekulardestilliert),

| | |
|---|---|
| dyn. Viskosität bei 23 °C | 3 000 mPas |
| bei 40 °C | 680 mPas |
| Epoxid-Aequiv. Gewicht | 172-176 g/Mol |
| OH-Gehalt | nicht nachweisbar |
| Schmelzpunkt | 42 °C |

(B-2) Epoxidverbindung : Bisphenol-F-diglycidyläther,

| | |
|---|---|
| dyn. Viskosität bei 23 °C | 5 000-7 000 mPas |
| Epoxid-Aequiv. Gewicht | 170-183 g/Mol. |

## Beispiel 1

1 Aequivalent Epoxidverbindung B-1 (molekulardestilliert, Epoxidäquivalent 175) und 2 Aequivalent Polyisocyanat A-1 wurden mit 0,2 % Bortrichlorid-Octyldimethylamin-Additions-komplex und mit 1 % Triallylisocyanurat vermischt. Die Anfangsviskosität der so erhaltenen erfindungsgemässen Mischung betrug bei 23 °C 70 mPas. Die Topfzeit ausweislich Viskositätsverdoppelung betrug bei 23 °C Lagerungstemperatur mehr als 50 Tage.

Die Mischung liess sich in 15 Std. bei 160 °C voll aushärten und zeigte dann einen Biegefestigkeitswert (23 °C) von 180 N/mm².

## Beispiel 2 (Vergleich)

Es wurde wie in Beispiel 1 gearbeitet, jedoch ohne Zusatz von TAC.

Die erhaltenen nicht-erfindungsgemässe Mischung hatte zwar eine Topfzeit von etwa 50 Tagen, zeigte jedoch nach dem Aushärten unter den Bedingungen von Beispiel 1 eine erheblich geringere Biegefestigkeit (118 N/mm²).

## Beispiel 3

Die Arbeitsweise von Beispiel 1 wird unter Verwendung von Polyisocyanat A-2 in äquivalenter Menge anstelle von A-1 wiederholt ; man erhält ähnlich gute Ergebnisse bezüglich Topfzeit und Biegefestigkeit wie in Beispiel 1.

## Beispiel 4

Die Arbeitsweise von Beispiel 1 wird unter Verwendung von Polyisocyanat A-3 in äquivalenter Menge anstelle von A-1 wiederholt ; man erhält ähnlich gute Ergebnisse bezüglich Topfzeit und Biegefestigkeit wie in Beispiel 1.

## Beispiel 5

Die Arbeitsweise von Beispiel 1 wird unter Verwendung von Epoxidverbindung B-2 in äquivalenter

Menge anstelle von B-1 wiederholt; man erhält ähnlich gute Ergebnisse bezüglich Topfzeit und Biegefestigkeit wie in Beispiel 1.

Allgemein können Härtungstemperaturen zwischen 100 und 250 °C, insbesondere 150-210 °C, und Härtungszeiten von einigen Stunden angewendet werden.

Erfindungsgemässe Harzmischungen können mit Vorteil zum Tränken bzw. Imprägnieren von imprägnierfähigen Stoffen (Gewebe, Bänder, Nonwovens sowie deren Kombinationen mit Materialien, wie Glimmer) verwendet werden, wie sie in der elektrischen Isolationstechnik von elektrischen Maschinen und Apparaten üblicher Art verwendet werden, um die Eigenschaften der Isolationen der elektrischen Leiter und Wicklungen sowie deren mechanische, elektrisch nicht leitende Abstützelemente vor allem in elektrischer, mechanischer und thermischer Hinsicht wesentlich zu verbessern.

**Ansprüche**

1. Duroplastisch härtbare lösungsmittelfreie Harzmischung, insbesondere zur Verwendung als hoch wärmebeständiges Imprägnier-, Tränk- und Giessharz für die Isolation von elektrischen Leitern und Wicklungen in elektrischen Maschinen und Apparaten, die mindestens eine reaktive flüssige Epoxidverbindung, mindestens ein reaktives flüssiges Polyisocyanat und mindestens einen latenten Härter für die genannten Komponenten enthält, dadurch gekennzeichnet, dass die Mischung ausserdem Triallylcyanurat als Vernetzungsmittel in einem Anteil von mindestens 0,1 % und höchstens 30 %, bezogen auf das Gewicht der gesamten Mischung, enthält.

2. Mischung nach Anspruch 1, dadurch gekennzeichnet, dass sie als Polyisocyanat ein solches mit aromatischen oder/und cycloaliphatischen Anteilen, insbesondere Diphenylmethandiisocyanat und/oder ein aus Diphenylmethandiisocyanat gebildetes Carbodiimid und/oder Isophorondiisocyanat, enthält.

3. Mischung nach einem der Ansprüche 1-2, dadurch gekennzeichnet, dass sie als Epoxidverbindung einen Bisphenol-A-diglycidyläther enthält.

4. Mischung nach einem der Ansprüche 1-3, dadurch gekennzeichnet, dass sie als latenten Härter einen Aminkomplex von Bortrichlorid oder von Bortrifluorid enthält.

5. Mischung nach einem der Ansprüche 1-4, dadurch gekennzeichnet, dass jeweils für ein Aequivalent Polyepoxidverbindung 2 bis 5,5 Aequivalent Polyisocyanat in der Mischung enthalten sind.

6. Verwendung der Harzmischung nach einem der Ansprüche 1-5 als Imprägnier-, Tränk- oder Giessharz für die Herstellung elektrischer Maschinen.

**Claims**

1. Thermosetting curable solvent-free resin mixture, in particular for use as highly heat-resistant impregnating resin, dip-coating resin and casting resin for the insulation of electrical conductors and windings in electrical machines and apparatus, which mixture contains at least one reactive liquid epoxide compound, at least one reactive liquid polyisocyanate and at least one latent curing agent for the said components, characterised in that the mixture additionally contains triallyl cyanurate as a crosslinking agent, in a proportion of a least 0.1 % and at most 30 %, relative to the weight of the total mixture.

2. Mixture according to Claim 1, characterised in that, as the polyisocyanate, it contains a polyisocyanate with aromatic or/and cycloaliphatic fractions, in particular diphenylmethane-diisocyanate and/or a carbodiimide formed from diphenylmethane-diisocyanate and/or isophorone-diisocyanate.

3. Mixture according to one of Claims 1-2, characterised in that it contains a bisphenol-A diglycidyl ether as the epoxide compound.

4. Mixture according to one of Claims 1-3, characterised in that it contains an amine complex of boron trichloride or boron trifluoride as the latent curing agent.

5. Mixture according to one of Claims 1-4, characterised in that 2 to 5.5 equivalents of polyisocyanate are contained in the mixture for each equivalent of polyepoxide compound.

6. Use of the resin mixture according to one of Claims 1-5 as an impregnating resin, dip-coating resin or casting resin for the manufacture of electrical machines.

**Revendications**

1. Mélange de résines exempt de solvants, durcissable par voie duroplaste et destiné, en particulier, à être utilisé comme résine d'imprégnation, d'immersion et de coulée d'une haute stabilité thermique pour l'isolation de conducteurs et d'enroulements électriques dans des machines et des appareils électriques, ce mélange contenant au moins un composé époxy liquide réactif, au moins un polyisocyanate liquide réactif et au moins un agent durcissant latent pour les composants mentionnés, caractérisé en ce que ce mélange contient, en outre, du cyanurate de triallyle comme agent de réticulation en une quantité minimum de 0,1 % et en une quantité maximum de 30 %, calculé sur le poids de tout le mélange.

2. Mélange suivant la revendication 1, caractérisé en ce que, comme polyisocyanate, il contient un polyisocyanate comportant des fractions aromatiques et/ou cycloaliphatiques, en particulier, le diphénylméthane-diisocyanate et/ou un carbodiimide formé à partir de diphénylméthane-diisocyanate et/ou l'isophorone-diisocyanate.

3. Mélange suivant une des revendications 1-2, caractérisé en ce que, comme composé époxy, il contient un éther diglycidylique de bisphénol A.

4. Mélange suivant une des revendications 1-3, caractérisé en ce que, comme agent durcissant latent, il contient un complexe aminé de trichlorure de bore ou de trifluorure de bore.

5. Mélange suivant une des revendications 1-4, caractérisé en ce que, chaque fois pour 1 équivalent de composé polyépoxy, 2 à 5,5 équivalents de polyisocyanate sont contenus dans le mélange.

6. Utilisation du mélange de résines suivant une des revendications 1-5 comme résine d'imprégnation, d'immersion ou de coulée pour la fabrication de machines électriques.